# FASCICULE DE BREVET EUROPEEN

(11) **EP 4 281 268 B1**
(45) Date de publication et mention de la délivrance du brevet: **27.03.2024**
(21) Numéro de dépôt: 22700509.7
(22) Date de dépôt: 20.01.2022
(51) Int. Cl.: B29C 45/26, B29C 45/73, B29D 11/00, B29C 33/06, B29C 45/00, B29L 11/00, B29L 31/00, B29C 35/08

(54) **DISPOSITIF DE CHAUFFAGE PAR INDUCTION ADAPTÉ AU MOULAGE D'UNE PIÈCE DE PETITE DIMENSION**
INDUKTIONSHEIZVORRICHTUNG ZUM GIESSEN VON FORMTEILEN MIT GERINGEN ABMESSUNGEN
INDUCTION HEATING DEVICE FOR MOULDING PARTS WITH SMALL DIMENSIONS

(30) Priorité: 20.01.2021 FR 2100551
(43) Date de publication de la demande: 29.11.2023
(73) Titulaire: Roctool, 73370 Le Bourget du Lac (FR)
(72) Inventeur: FEIGENBLUM, José, 73170 Saint Paul (FR)
(74) Mandataire: Hamann, Jean-Christophe
(86) Numéro de dépôt international: PCT/EP2022/051286
(87) Numéro de publication internationale: WO 2022/157275

(56) Documents cités:
- WO-A1-2011/040180
- JP-A- H0 596 576
- JP-A- H05 185 472
- JP-A- S63 139 721
- JP-A- 2001 113 580

## Description

### Domaine technique

L'invention appartient au domaine des procédés de moulage, plus particulièrement au moulage de pièces de petites dimensions.

À titre d'exemple non limitatif, l'invention s'applique au moulage de lentilles destinées à une caméra de téléphone intelligent (*smartphone*).

L'invention concerne un outillage adapté à la fabrication en très grande série de ce type de pièce, pourvu d'un dispositif de chauffage et de refroidissement rapides.

### Technique antérieure

Dans le moulage en très grande série de pièces en verre ou en plastique, dit verre organique, dont les températures de coulée sont relativement élevées, les temps de chauffage et de refroidissement des moules ont une influence majeure sur les temps de cycles de fabrication.

En effet, le moule doit être chauffé à une température assurant une fluidité suffisante de la matière moulée de sorte à assurer un remplissage homogène de l'empreinte, puis refroidi à une température de consolidation suffisante du matériau mis en oeuvre, pour permettre le démoulage sans détériorer la pièce ainsi réalisée. Selon le matériau moulé ces températures sont par exemple définies en rapport avec les températures de fusion et de solidification de la matière et/ou en rapport avec la température de transition vitreuse ou de cristallisation de ladite matière.

D'une manière générale, les moules sont massifs en regard de la pièce réalisée et leur masse est supérieure de plusieurs ordres de gardeur à la masse de la pièce moulée.

Aussi, la notion de chauffage et de refroidissement rapides s'applique essentiellement à la masse du moule.

Les techniques de chauffage par induction, couplées à un refroidissement par circulation de fluide, telle que décrites, par exemple, dans les documents US 7,679,036 ou US 10,232,530, permettent de concentrer le chauffage sur les surfaces du moule en contact avec la matière moulée, tout en assurant une température de chauffage uniforme sur ces surfaces. WO 2011/040180 A1 divulgue un moule comprenant une carcasse. La carcasse comprenant un logement apte à recevoir un insert et l'insert est configuré pour s'intégrer dans la carcasse. La carcasse comprend un logement pour une matrice comprenant une surface moulante de la pièce à mouler et un dispositif pour le chauffage de la matrice.

Ainsi, en limitant le volume de matière chauffée et refroidie, et en tirant avantage de la puissance importante de chauffage que permet l'induction, ces techniques de l'art antérieur permettent de réduire les temps de cycles de chauffage - refroidissement.

Toutefois, lorsque les pièces réalisées sont de petite dimension, par exemple une lentille avec un diamètre inférieur à 10 mm, et plus généralement inférieure à 2 mm, que lesdites pièces sont par ailleurs fines, par exemple d'une épaisseur comprise entre 0,1 mm et 0,3 mm et que lesdites pièces doivent être réalisées avec une précision élevée, compatible avec l'optique, ces techniques de l'antérieur sont mal adaptées, même en considérant un moule comprenant une pluralité d'empreintes.

De plus, même en mettant en oeuvre ces techniques de l'art antérieur, le volume et la masse subissant les cycles thermiques sont importants en regard de la masse des pièces réalisées.

### Exposé de l'invention

L'invention vise à résoudre les insuffisances de l'art antérieur et concerne à cette fin un moule, adapté au moulage d'une pièce de petite dimension, et comprenant une carcasse, apte à être montée sur le plateau d'une presse, ladite carcasse comprenant un logement apte à recevoir un insert ; un insert configuré pour s'intégrer dans la carcasse, lequel insert comprenant un logement pour une matrice comprenant une surface moulante de la pièce à mouler ; un dispositif pour le chauffage de la matrice, lequel dispositif comprend une pige constituée d'un matériau sensible au chauffage par induction, ladite pige étant montée dans l'insert et dont une extrémité est en contact avec la matrice, la surface moulante étant sensiblement centrée par rapport à la pige, une spire constituée d'un matériau conducteur et entourant la pige, ladite spire étant connectée à un générateur de courant à haute fréquence de sorte que lorsqu'elle est alimentée électriquement, elle génère un courant induit dans la pige, qui chauffe ladite pige par induction, la pige transmettant la chaleur à la matrice, et dans lequel le diamètre extérieur de la pige est supérieur ou égal au diamètre extérieur du périmètre délimitant la surface moulante.

Ainsi, le moule objet de l'invention permet de concentrer le chauffage sur la surface moulante en utilisant la combinaison de la pige et de la spire, pour atteindre rapidement une température élevée au niveau de ladite surface moulante, tout en ne mettant en oeuvre qu'une puissance électrique réduite.

L'invention est avantageusement mise en oeuvre selon les modes de réalisation et les variantes exposés ci-après, lesquels sont à considérer individuellement ou selon toute combinaison techniquement opérante.

Avantageusement, la carcasse comprend un circuit pour la circulation d'un fluide caloporteur pour le refroidissement de l'insert et de la matrice.

Ainsi, les temps de cycles sont réduits par la possibilité de refroidissement forcé.

Selon un mode de réalisation particulier l'insert comprend un circuit pour la circulation d'un fluide caloporteur, connecté au circuit de circulation fluide de la carcasse.

Outre le refroidissement plus rapide de la matrice et la réduction des temps de cycle, ce circuit permet également de faire de la régulation thermique en utilisant de concert le chauffage par induction et le refroidissent par circulation fluide, pour des applications qui le nécessite.

Selon un mode de réalisation particulier la carcasse et l'insert comportent des circuits de refroidissement séparés. Ce mode de réalisation permet de faire circuler des fluides caloporteurs différents dans la carcasse et dans l'insert, lesdits fluides étant adaptés aux températures qu'ils atteignent au cours de l'opération de moulage.

Selon un mode de réalisation, le circuit de refroidissement de l'insert comprend un baffle. La présence du baffle favorise un écoulement turbulant du fluide de refroidissement dans le conduit et les échanges convectifs avec les parois.

Avantageusement, le moule objet de l'invention comprend un thermocouple logé à l'intérieur de la pige et dont la soudure chaude se trouve à proximité de l'extrémité de ladite pige.

Les informations issues dudit thermocouple permettent de piloter tant le chauffage que le refroidissement de sorte à optimiser le cycle de fabrication.

Selon un mode de réalisation préféré, le diamètre extérieur du périmètre délimitant l'encombrement externe de la surface moulante est inférieur à 5 mm, préférentiellement inférieur à 2 mm.

Selon un mode de réalisation avantageux, la spire produisant l'induction est constituée de cuivre et comprend une partie annulaire, entourant la deuxième partie de la pige, et des branches pour sa connexion à la source de courant alternatif à haute fréquence, les sections des branches et de la partie annulaire étant inférieures ou égales à 10 mm². Ainsi la section réduite de la spire limite sa résistance électrique et son échauffement sous l'effet de la circulation du courant alternatif, de sorte qu'il n'est pas nécessaire de prévoir un dispositif de refroidissement forcé de ladite spire.

Selon un mode de réalisation préféré, la matrice comprend une partie moulante portant la surface moulante et constituée d'un acier sensible au chauffage par induction et une partie technique constituée d'un matériau de diffusivité thermique élevée. Ce mode de réalisation favorise à la fois un chauffage et un refroidissement rapides.

Avantageusement, la surface moulante de la partie moulante de la matrice est constituée de nickel. Ce mode de réalisation est particulièrement adapté au moulage de pièces optiques.

Ainsi, le moule objet de l'invention est avantageusement utilisé sur une presse d'injection plastique pour la réalisation en grande série de lentilles de caméra miniature.

Cette utilisation du moule objet de l'invention est particulièrement adaptée à la fabrication de lentilles d'une épaisseur comprise entre 0,1 mm et 0,3 mm.

### Brève description des dessins

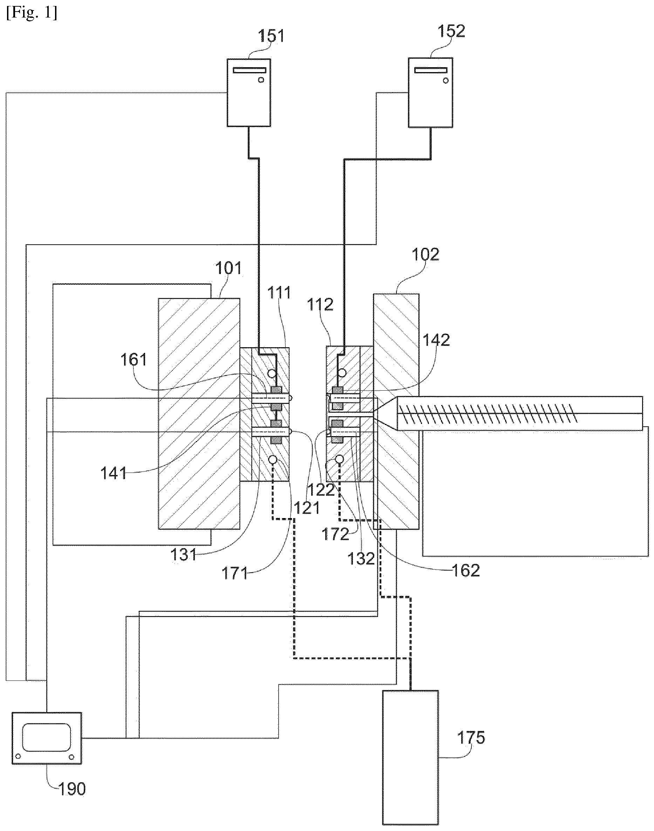

L'invention est mise en oeuvre selon les modes de réalisation préférés, nullement limitatifs, exposés ci-après en référence aux figures 1 à 5 dans lesquelles :
**Fig.1**
   [Fig.1] est une vue d'ensemble schématique en vue de dessus d'un ensemble de moulage par injection mettant en oeuvre un moule selon l'invention ;
**Fig.2**

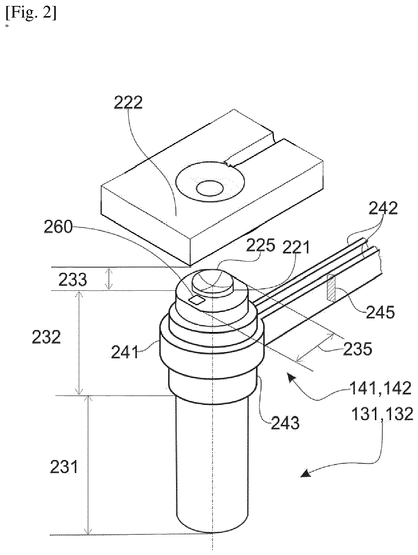

   [Fig.2] représente selon une vue en perspective de côté et en éclaté, un exemple de réalisation, d'une pige et d'une matrice mise en oeuvre dans un moule selon l'invention ;
**Fig.3**

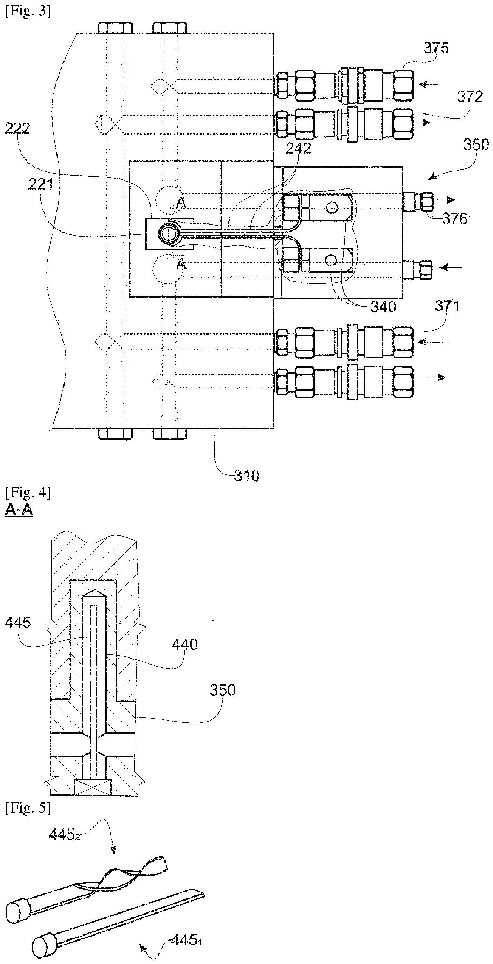

   [Fig.3] montre selon une vue de face partielle, en coupe partielle, un exemple de réalisation d'une partie du moule objet de l'invention ;
**Fig.4**
   [Fig.4] illustre un exemple de réalisation d'un refroidissement par circulation d'un fluide caloporteur dans l'insert dans des conduits pourvus de baffles selon une coupe A-A partielle définie à la [Fig.3] ;
**Fig.5**
   [Fig.5] représente selon des vues en perspective des exemples de réalisation d'un baffle.

### Mode(s) de réalisation l'invention

Selon un exemple de réalisation, représenté par la [Fig. 1], d'une installation mettant en oeuvre le moule objet de l'invention, celle-ci comprend une presse d'injection de matière plastique, sur les plateaux (101, 102) de laquelle sont montées en vis-à-vis les deux parties (111, 112) d'un moule.

L'un des plateaux (101) est mobile, pour se rapprocher et s'éloigner de l'autre plateau (102). Ainsi, lorsque deux parties (111, 112) du moule sont rapprochées l'une de l'autre et maintenues l'une contre l'autre par les moyens d'ouverture/fermeture de la presse, elles définissent une pluralité de cavités étanches dans lesquelles la matière moulée, dans un état liquide ou pâteux, est injectée.

La matière se conforme aux surfaces moulantes des cavités étanches, puis le moule est refroidi pour entraîner la solidification de ladite matière.

Le moule est alors ouvert en écartant les plateaux de la presse l'un de l'autre et les pièces ainsi réalisées sont démoulées.

Ainsi, selon cet exemple de réalisation, une première partie du moule (111) porte des matrices comprenant des surfaces moulantes en relief (121) et la partie de moule (112) en vis-à-vis porte des matrices comprenant des surfaces moulantes en creux (122).

Lorsque le moule est fermé et que les deux parties (111, 112) sont maintenues l'une contre l'autre, les cavités moulantes sont délimitées par les surfaces moulantes (121, 122) de ces deux parties.

Les matrices portant ces surfaces moulantes (121, 122) sont installées au contact de piges (131, 132), maintenues dans chaque partie de moule.

Les piges sont constituées d'un matériau sensible au chauffage par induction, par exemple un alliage ferromagnétique, tel qu'un acier d'outillage martensitique.

Selon un mode de réalisation, les surfaces moulantes sont réalisées en nickel poli, avec un polissage de qualité optique. Le nickel est déposé par toute technique de placage ou de revêtement sur la surface moulante.

Chaque pige est entourée, mais sans contact mécanique avec celle-ci, d'une spire (141, 142) constituée d'un matériau électriquement conducteur tel que du cuivre.

Les spires sont connectées à un générateur de courant à haute fréquence (151, 152), fréquence typiquement comprise entre 10 KHz et 200 KHz.

Lorsque la spire est alimentée en courant électrique à haute fréquence, la pige étant constitué d'un matériau ayant une perméabilité magnétique élevée, le courant induit dans la pige chauffe. La pige transmet sa chaleur par conduction à la matrice.

Selon la vue en coupe de la [Fig.1], chaque partie de moule (101, 102) comprend 2 matrices, situées en extrémité de 2 piges, chacun des ensembles pige - matrice - spire étant identique pour une même partie (101, 102) de moule sans que cette disposition particulière ne constitue une limitation.

Selon des variantes de réalisation la matrice vient de matière avec la pige en étant usinée à l'extrémité de celle-ci, ou, la matrice est assemblée à l'extrémité de la pige par assemblage mécanique, soudage ou brasage, ou encore la matrice est réalisée par fabrication additive directement sur l'extrémité de la pige.

Selon cet exemple de réalisation, un thermocouple (161, 162) est installé dans chaque pige et permet de mesurer la température à l'extrémité de la pige, proche de la surface moulante.

Chaque partie de moule comprend des conduits (171, 172) pour la circulation d'un fluide caloporteur.

Selon un exemple de réalisation, ledit fluide caloporteur est de l'eau et les conduits sont liés à un groupe de pompage et de refroidissement (175) lequel assure la circulation du fluide caloporteur dans les conduits (171, 172) du moule pour en assurer le refroidissement.

Selon d'autres exemple de réalisation, fonctions de la température de moulage et de la masse du moule et de la pièce moulée, le fluide caloporteur est une huile ou un gaz, la circulation dudit fluide étant réalisée en circuit fermé ou en circuit ouvert.

Le système objet de l'invention comprend avantageusement une baie de commande (190) contrôlant notamment, l'ouverture et la fermeture de la presse, les générateurs haute fréquence et l'alimentation électrique des spires, et la circulation du fluide caloporteur, ceci en fonction, notamment, de la mesure issue des thermocouples placés dans les piges.

Ainsi, le système est piloté de sorte à produire des cycles d'injection et température reproductibles.

Comme représenté par la [Fig.2], selon un exemple de réalisation la pige (131, 132) du moule objet de l'invention comprend essentiellement 3 parties fonctionnelles.

Selon un exemple de réalisation, une première partie (231) permet son centrage et son installation dans le moule.

Avantageusement, ledit moule comprend un insert, ledit insert étant monté dans une carcasse. La pige (131, 132) est alors montée dans ledit insert et ladite première partie (231) sert au positionnement de ladite pige dans ledit insert selon cet exemple de réalisation.

En continuité de cette première partie (231) et venant de matière avec elle selon cet exemple de réalisation, une deuxième partie (232), sensiblement cylindrique constitue la zone principalement soumise à l'induction électromagnétique.

A cette fin la deuxième partie (232) de la pige est constituée d'un matériau sensible au chauffage par induction et de préférence un matériau de perméabilité magnétique élevée, tel qu'un acier ferromagnétique.

Selon un autre mode de réalisation, la partie de la pige soumise au champ magnétique induit produit par la spire comprend un revêtement sensible au chauffage par induction. À titre d'exemple non limitatif, la pige est constituée de cuivre ou d'un alliage de cuivre ou plus généralement d'un matériau à conductivité thermique élevé, et comprend un revêtement, par exemple de nickel dans la zone soumis au champ magnétique généré par la spire. L'épaisseur du revêtement est sélectionnée en fonction de la profondeur de pénétration des courants induits.

L'induction est produite par une spire (141, 142) comprenant une partie annulaire (241) entourant la deuxième partie (232) de la pige, et des branches (242) pour la connexion de la spire à une source de courant alternatif à haute fréquence.

A titre d'exemple non limitatif, la source de courant à haute fréquence est un générateur de 25kw produisant un courant alternatif d'une fréquence comprise entre 35 KHz et 70 KHz. Ce type de générateur permet d'alimenter jusqu'à 4 dispositifs selon l'invention.

Les branches (242) sont en contact électrique avec la partie annulaire (241) et selon cet exemple de réalisation viennent de matière avec celle-ci, cet ensemble étant constitué d'un matériau électriquement conducteur tel que de cuivre.

Avantageusement, la section (245) de la spire est inférieure à 10 mm² de sorte à limiter l'échauffement de ladite pige lorsque celle-ci est parcourue par le courant alternatif à haute fréquence produit par le générateur.

Selon un mode de réalisation avantageux la spire est isolée de la pige par une bague d'isolation (243) constitué d'un matériau électriquement isolant, transparent vis-à-vis du champ magnétique et résistant à la température de chauffage générée dans la spire (141) et dans la deuxième partie de la pige.

Cette température peut atteindre 450°C, cependant, la bague isolante, la pige et la spire ne sont soumises à une telle température que pendant un temps très court, bien inférieur à 1 seconde.

A titre d'exemple non limitatif la bague d'isolation (243) est constituée d'une céramique, alternativement, ladite bague est constituée d'une matière plastique, renforcée ou non et apte à résister à une telle température pendant un temps très court.

Ladite bague isolante (243) assure le centrage et le maintien de la spire par rapport à la pige.

La troisième partie (233) de la pige est en contact avec la matrice, plus particulièrement avec la partie moulante (221) de la matrice.

Selon cet exemple de réalisation la matrice comprend une partie moulante (221) comprenant les surfaces moulantes de la pièce réaliser, partie moulante qui, selon cet exemple de réalisation, vient de matière avec la deuxième partie (232) de la pige, et une partie technique (222), apte à être assemblée et centrée sur la partie moulante (221).

Selon des variantes de réalisation, la partie moulante (221) est connectée à la pige par assemblage mécanique, soudage ou brasage.

La partie moulante de la matrice s'inscrit dans un cercle (225) d'encombrement extérieur dont le diamètre est inférieur au diamètre (235) de la deuxième partie (232) de la pige.

Cette disposition assure un chauffage rapide et uniforme de la surface moulante (221) en agissant par induction de manière localisée sur la deuxième partie (232) de la pige, avec une puissance réduite.

En contrepartie, ce dispositif est plus particulièrement adapté à la réalisation de pièces de petites dimension, dont le diamètre (225) d'encombrement extérieur des surfaces moulantes est inférieur à 5 mm préférentiellement inférieur à 2 mm, et du même ordre de grandeur pour le creux ou la protrusion desdites surfaces moulantes, de sorte que le moule objet de l'invention s'applique plus particulièrement, mais non exclusivement, au moulage de lentilles optiques de petite dimension telles que sur des caméras de téléphone portable, « webcams », micro caméra de surveillance ou micro dispositifs optiques de visée.

La partie technique (222) de la matrice permet notamment la matérialisation du plan de joint de l'empreinte et assure des fonctions d'étanchéité, des fonctions d'amenée de la matière dans ladite empreinte, et facilite le refroidissement de la partie moulante (221) par la diffusion de la chaleur vers les moyens de refroidissement du moule.

Selon un exemple de réalisation, la partie moulante (221) est constituée d'un acier à outillage, sensible au chauffage par induction. Avantageusement, la surface moulante de la partie moulante est constituée de nickel et polie.

Ainsi, lorsque la spire (141, 142) est alimentée en courant alternatif à haute fréquence celle-ci produit un certain effet de chauffage sur la matrice. Toutefois, la configuration de la spire, dont la portion annulaire (241) entoure la deuxième partie (232) de la pige, fait que l'essentiel de l'effet de chauffage se concentre sur ladite deuxième partie de la pige, cette chaleur est ensuite transférée par conduction, sur une courte distance, à la matrice.

Selon cet exemple de réalisation, la pige comprend avantageusement un ou plusieurs logements (260) s'étendant sur toute ou partie de sa longueur, pour y introduire des thermocouples.

Lesdits thermocouples mesurent avantageusement la température au plus proche de la partie moulante (221).

La partie technique (222) est, selon des exemples de réalisation, constituée du même acier à outillage que la partie moulante, mais selon d'autres variante est constituée d'un acier ou d'un autre matériau non sensible au chauffage par induction, mais présentant une diffusivité thermique élevée telle qu'un alliage de cuivre résistant aux températures de mise en oeuvre du matériau moulé.

La diffusivité thermique d'un matériau est définie par le rapport λ/ρc où λ est la conductivité thermique du matériau, ρ sa masse volumique et c sa capacité thermique massique. Dans le cas présent, une diffusivité thermique élevée est considérée supérieure à 50.10⁻⁶ m²/s, préférentiellement supérieure à 100.10⁻⁶ m²/s.

Ce dernier mode de réalisation permet un refroidissement plus rapide de la matrice après injection de la matière à mouler,

Selon un exemple de réalisation, représenté par la [Fig.3], le moule objet de l'invention comprend une carcasse (310) apte à recevoir un ou plusieurs inserts (350) chaque insert portant sa propre matrice et son propre dispositif de chauffage connectable à un générateur de courant alternatif à haute fréquence au moyen de connexions (340) adaptées.

L'insert porte ainsi la matrice, constituée de la partie moulante (221) et de la partie technique, la pige, les moyens de chauffage comprenant la spire et ses moyens de connexion à un générateur à haute fréquence et des moyens de refroidissement sous la forme de conduits pour la circulation d'un fluide caloporteur.

Ainsi, le moule objet de l'invention est modulables et les parties moulantes sont interchangeable sans ré-usinage de la carcasse, ni même de l'insert, seule la pige étant changée.

La carcasse (310) comprend un ou plusieurs circuits pour la circulation d'un fluide caloporteur pour le refroidissement de la carcasse, de l'insert, de la matrice et de la pige.

Ainsi, selon un exemple de réalisation, un ou plusieurs premiers circuits permettent une circulation entre une entrée (371) et une sortie (372) pour une circulation du fluide caloporteur dans la carcasse, autour de l'insert.

Un ou plusieurs autres circuits comprennent une entrée (375) et une sortie (376) pour une circulation du fluide caloporteur passant par la carcasse (310) et par l'insert (350) au plus près de la pige. Selon cet exemple de réalisation, l'insert (350) comprend un circuit interne pour la circulation du fluide caloporteur, lequel circuit interne est connecté au circuit de la carcasse lorsque l'insert y est installé. À cette fin l'insert comprend des moyens d'étanchéités adaptés (non représentés) pour réaliser cette connexion.

Selon d'autres modes de réalisation, l'insert comprend son propre circuit de refroidissement, lequel utilise éventuellement un fluide caloporteur différent de celui de la carcasse.

Ainsi, la carcasse est par exemple refroidie par une circulation d'eau et l'insert, et optionnellement la pige, sont refroidis par la circulation d'un gaz, par exemple de l'air, de l'argon, de l'azote du dioxyde de carbone ou de l'hélium sans que ces exemples ne soient limitatifs.

Ainsi, selon un exemple de réalisation représenté [Fig.4], l'insert (350) et optionnellement la pige comporte des conduits (450) de circulation d'un gaz sous pression pour en assurer le refroidissement, ces conduits comprennent avantageusement des baffles (445) ou turbulateurs afin de favoriser les échanges convectifs.

La [Fig.5] montre des exemples de réalisation de tels baffles, droits (445₁) ou torsadés (445₂), lesdits baffles sont réalisés en acier, bronze ou en matière plastique sans que ces exemples ne soient limitatifs.

L'effet avantageux de ces baffles n'est pas limité au cas d'une circulation gazeuse, et ceux-ci sont également aptes à favoriser les échanges convectifs, et donc le refroidissement, dans le cas d'un fluide caloporteur liquide tel que de l'eau ou de l'huile.

Le chauffage localisé de la pige par induction et les circuits de circulation fluide, permettent de piloter des cycles de chauffage et de refroidissement rapides adaptés à la production en grande série.

A titre d'exemple non limitatif, sur un cycle typique de moulage d'une lentille d'appareil photo de téléphone portable, le chauffage de la surface moulante à une température de 260°C en partant d'une température de 130°C correspondant à la température de la matrice après démoulage de la pièce précédente, est réalisé en moins de 5 secondes, plus couramment en moins de 2 secondes, avec une puissance d'induction inférieure à 5 KW. Le refroidissement de cette température à la température de démoulage inférieure à 190°C est obtenu en 10 secondes avec un débit d'eau de 2,5 litres par minute par circuit de refroidissement, pour des conduits de 5 mm de diamètre, permettant des cycles complets, entre deux démoulages, inférieurs à la minute.

La description ci-avant et les exemples de réalisation montrent que l'invention atteint le but visé, en particulier, le moule objet de l'invention permet le chauffage et le refroidissement rapide des empreintes et des pièces qu'elles comprennent avec des puissances réduites et est particulièrement adapté à la réalisation de pièces minces et de petites dimensions telles que des lentilles optiques.

## Revendications

1. Moule, adapté au moulage d'une pièce de petite dimension, et comprenant une carcasse (310), apte à être montée sur le plateau (101, 102) d'une presse, ladite carcasse comprenant un logement apte à recevoir un insert (350); l'insert (350) est configuré pour s'intégrer dans la carcasse (310), et comprend un logement pour une matrice comprenant une surface moulante (121, 122) de la pièce à mouler ; un dispositif pour le chauffage de la matrice ; **caractérisé en ce que** ledit dispositif de chauffage comprend une pige (131, 132) constituée d'un matériau sensible au chauffage par induction, ladite pige étant montée dans l'insert (350) et dont une extrémité est en contact avec la matrice, la surface moulante (121, 122) étant sensiblement centrée par rapport à la pige et une spire (141, 142) constituée d'un matériau conducteur et entourant la pige, ladite spire étant connectée à un générateur (151, 152) de courant alternatif à haute fréquence de sorte que lorsqu'elle est alimentée électriquement, elle génère un courant induit dans la pige (131, 132), qui chauffe ladite pige par induction, la pige transmettant la chaleur à la matrice, et dans lequel le diamètre extérieur (235) de la pige est supérieur ou égal au diamètre extérieur du périmètre (225) délimitant l'encombrement externe de la surface moulante (121, 122).

2. Moule selon la revendication 1, dans lequel la carcasse (310) comprend au moins un circuit (171, 172) pour la circulation d'un fluide caloporteur pour le refroidissement de l'insert (350) et de la matrice.

3. Moule selon la revendication 2, dans lequel la carcasse (310) et l'insert (350) comportent des circuits de refroidissement séparés.

4. Moule selon la revendication 3, dans lequel le circuit de refroidissement de l'insert comprend un conduit (440) pour la circulation d'un fluide caloporteur.

5. Moule selon la revendication 4, dans lequel le conduit (440) pour la circulation d'un fluide caloporteur dans l'insert comprend un baffle (445, 445₁, 445₂).

6. Moule selon la revendication 1, comprenant un thermocouple (161, 162), logé à l'intérieur de la pige (131, 132) et dont la soudure chaude se trouve à proximité de l'extrémité de ladite pige.

7. Moule selon la revendication 1, dans lequel le diamètre extérieur du périmètre (225) délimitant l'encombrement externe de la surface moulante (121, 122) est inférieur à 5 mm, préférentiellement inférieur à 2 mm.

8. Moule selon la revendication 7, dans lequel la spire (141, 142) est constituée de cuivre et comprend une partie annulaire (241) entourant la deuxième partie (232) de la pige et des branches (242) pour sa connexion à la source de courant alternatif à haute fréquence et dont les sections (245) des branches et de la partie annulaire sont inférieures ou égales à 10 mm².

9. Moule selon la revendication 1, dans lequel la matrice comprend une partie moulante (221) portant la surface moulante (121, 122) et constituée d'un acier sensible au chauffage par induction et une partie technique (225) constituée d'un matériau de diffusivité thermique élevée.

10. Moule selon la revendication 9, dans lequel la surface moulante (121, 122) de la partie moulante de la matrice est constituée de nickel.

11. Utilisation du moule selon la revendication 10, sur une presse d'injection plastique pour la réalisation en grande série de lentilles de caméra miniature.

12. Utilisation du moule selon la revendication 11, dans lequel l'épaisseur de la lentille est comprise entre 0,1 mm et 0,3 mm

## Patentansprüche

1. Form, die zum Formen eines kleinformatigen Teils geeignet ist und ein Gehäuse (310) umfasst, das auf einer Pressenplatte (101, 102) montiert werden kann, wobei das Gehäuse ein Gehäuse umfasst, das zur Aufnahme eines Einsatzes (350) konfiguriert ist;
wobei der Einsatz (350) so konfiguriert ist, dass er in das Gehäuse (310) integriert werden kann, und ein Gehäuse für eine Form umfasst, die eine Formfläche (121, 122) für das Teil umfasst;
eine Vorrichtung zum Beheizen der Form;
**dadurch gekennzeichnet, dass** die Heizvorrichtung umfasst:
einen Stab (131, 132) aus einem Material, das für eine Induktionserwärmung geeignet ist, wobei der Stab in dem Einsatz (350) angebracht ist und ein Ende in Kontakt mit der Form steht, wobei die Formfläche (121, 122) im Wesentlichen in Bezug auf den Stab zentriert ist; und
eine Spule (141, 142), die aus einem elektrisch leitenden Material besteht und den Stab umgibt, wobei die Spule mit einem Hochfrequenzstromgenerator (151, 152) verbunden ist, so dass, wenn die Spule mit einem elektrischen Strom versorgt wird, sie einen induzierten Strom in dem Stab (131, 132) erzeugt, der den Stab durch Induktion erwärmt, wobei der Stab Wärme an die Form überträgt,
und wobei ein Außendurchmesser (235) des Stabes größer oder gleich einem Außendurchmesser eines Umfangs (235) ist, der die Formfläche (121, 122) begrenzt.

2. Die Form nach Anspruch 1, wobei das Gehäuse (310) mindestens einen Kreislauf (171, 172) zum Zirkulieren eines Wärmeübertragungsfluids zum Kühlen des Einsatzes (350) und der Form umfasst.

3. Form nach Anspruch 2, wobei das Gehäuse (310) und der Einsatz (350) getrennte Kühlkreisläufe aufweisen.

4. Die Form nach Anspruch 1, wobei der Kühlkreislauf des Einsatzes eine Leitung (440) umfasst, die für die Zirkulation einer Wärmeübertragungsflüssigkeit geeignet ist.

5. Form nach Anspruch 4, wobei die Leitung (440) für die Zirkulation einer Wärmeübertragungsflüssigkeit in dem Einsatz ein Ablenkblech (445, 4451, 4452) umfasst.

6. Form nach Anspruch 1, umfassend ein Thermoelement (161, 162), das in der Stange (131, 132) untergebracht ist und dessen heiße Verbindungsstelle sich nahe dem Ende der Stange befindet.

7. Form nach Anspruch 1, bei der ein Außendurchmesser des Umfangs (225), der eine Außenseite der Formfläche (121, 122) begrenzt, weniger als 5 mm, vorzugsweise weniger als 2 mm beträgt.

8. Form nach Anspruch 7, bei der die Spule (141, 142) aus Kupfer besteht und einen ringförmigen Abschnitt (241), der einen zweiten Abschnitt (232) des Stabes umgibt, und Stiele (242) für ihren Anschluss an eine Hochfrequenz-Wechselstromquelle umfasst, wobei die Querschnitte (245) der Stiele und des ringförmigen Abschnitts kleiner oder gleich 10 mm2 sind.

9. Form nach Anspruch 1, **dadurch gekennzeichnet, dass** die Matrize einen Formteil (221) aus einem für Induktionserwärmung empfindlichen Stahl, der die Formfläche (121, 122) trägt, und einen technischen Teil (225) aus einem Material mit hoher Temperaturleitfähigkeit umfasst.

10. Form nach Anspruch 9, wobei die Formfläche (121, 122) des Formteils der Matrize aus Nickel hergestellt ist.

11. Verwendung der Form nach Anspruch 10 auf einer Kunststoffspritzgusspresse zur Herstellung von Miniaturlinsen für Kameras in großen Stückzahlen.

12. Verwendung der Form nach Anspruch 11, wobei die Dicke der Linse zwischen 0,1 mm und 0,3 mm liegt.

## Claims

1. A mold, adapted to molding a small-sized part, and comprising a casing (310) adapted to being mounted on a press platen (101, 102), the casing comprising a housing configured to receiving an insert (350);
the insert (350) being configured to be integrated into the casing (310) and comprising a housing for a die comprising a molding surface (121, 122) for the part;
a device for heating the die;
**characterized in that** the heating device comprises:
a rod (131, 132) made of a material susceptible to induction heating, the rod being mounted in the insert (350) and having one end in contact with the die, the molding surface (121, 122) being substantially centered with respect to the rod; and
a coil (141, 142) made of an electrically conductive material and surrounding the rod, the coil being connected to a high-frequency current generator (151, 152) so that when the coil is supplied with an electric current, it generates an induced current in the rod (131, 132), heating the rod by induction, the rod transmitting heat to the die,
and wherein an outer diameter (235) of the rod is greater than or equal to an outer diameter of a perimeter (235) delimiting the molding surface (121, 122).

2. The mold of claim 1, wherein the casing (310) comprises at least one circuit (171, 172) for circulating a heat transfer fluid for cooling the insert (350) and the die.

3. The mold of claim 2, wherein the casing (310) and the insert (350) comprise separate cooling circuits.

4. The mold of claim 1, wherein the insert cooling circuit comprises a conduit (440) adapted to the circulation of a heat transfer fluid.

5. The mold of claim 4, wherein the conduit (440) for the circulation of a heat transfer fluid in the insert comprises a baffle (445, 445₁, 445₂).

6. The mold of claim 1, comprising a thermocouple (161, 162) housed within the rod (131, 132) and a hot junction of which is close to the end of the rod.

7. The mold of claim 1, wherein an outside diameter of the perimeter (225) delimiting an outer of the molding surface (121, 122) is less than 5mm, preferably less than 2mm.

8. The mold of claim 7, wherein the coil (141, 142) is made of copper and comprises an annular portion (241) surrounding a second portion (232) of the rod and stems (242) for its connection to a high-frequency alternating current source, sections (245) of the stems and of the annular portion are less than or equal to 10mm².

9. The mold of claim 1, wherein the die comprises a molding portion (221) made of a steel susceptible to induction heating and carrying the molding surface (121, 122) and a technical portion (225) made of a material of a high thermal diffusivity.

10. The mold of claim 9, wherein the molding surface (121, 122) of the molding portion of the die is made of nickel.

11. A use of the mold of claim 10, on a plastic injection press for making miniature lenses for cameras in large runs.

12. The use of the mold of claim 11, wherein the thickness of the lens is comprised between 0.1mm and 0.3mm
